# EUROPEAN PATENT SPECIFICATION

(11) **EP 3 908 060 B1**
(45) Date of publication and mention of the grant of the patent: **27.08.2025**
(21) Application number: 20749677.9
(22) Date of filing: 15.01.2020
(51) Int. Cl.: H04W 8/22, H04W 72/23, H04L 5/00, H04W 72/0446

(54) **RESOURCE ALLOCATION METHOD, TERMINAL AND BASE STATION**
RESSOURCENZUWEISUNGSVERFAHREN, ENDGERÄT UND BASISSTATION
PROCÉDÉ D'ATTRIBUTION DE RESSOURCES, TERMINAL ET STATION DE BASE

(30) Priority: 28.01.2019 CN 201910081546
(43) Date of publication of application: 10.11.2021
(73) Proprietor: Huawei Technologies Co., Ltd., Shenzhen, Guangdong 518129 (CN)
(72) Inventor: YAN, Chaoyi, Shenzhen, Guangdong 518129 (CN); LUO, Yuanke, Shenzhen, Guangdong 518129 (CN)
(74) Representative: Gill Jennings & Every LLP
(86) International application number: PCT/CN2020/072189
(87) International publication number: WO 2020/156170

(56) References cited:
- WO-A1-2016/142905
- CN-A- 102 958 064
- CN-A- 105 101 421
- CN-A- 105 357 710
- CN-A- 107 211 427
- US-A1- 2015 326 378
- US-A1- 2018 027 589

## Description

### TECHNICAL FIELD

Embodiments of this application relate to the communications field, and in particular, to resource allocation methods, a terminal, and a base station and corresponding computer program product and computer-readable storage medium.

### BACKGROUND

In the related art, on a base station side, a downlink signal on Band 7 causes interference to an uplink signal on Band 38. Therefore, if Band 7 and Band 38 share an antenna plane, interference suppression needs to be performed on Band 7 and Band 38. Obviously, this increases complexity and costs of device design.

WO 2016/142905 A1 describes a system and method for selecting and adapting carrier aggregation configurations.

### SUMMARY

The invention is defined by the appended independent claims and further embodiments are described by the dependent claims.

To achieve the foregoing objective, this application uses the following technical solutions.

According to a first aspect, this application provides a resource allocation method, applied to a base station, and the method includes: receiving band information sent by a terminal, where the band information is used to indicate band types supported by the terminal; and sending configuration information to the terminal if it is detected that the band information indicates that the band types supported by the terminal include a first band and one or more second bands, where the configuration information is used to indicate to allocate the first band and the second band to the terminal, and the configuration information indicates the first band to operate in a supplemental downlink (SDL) mode, where the second band is different from the first band and a third band, and the third band is a band that causes interference to an uplink signal if the uplink signal is on the first band.

In the foregoing manner, this application is adaptable to multivariate scenarios such as limited antenna planes, so that implementation is simple, and costs can be effectively reduced.

In a possible implementation, the configuration information includes uplink and downlink slot assignment information of the first band.
In a possible implementation, the configuration information includes carrier configuration information indicating that the second band is a primary carrier and the first band is a secondary carrier.

In a possible implementation, the first band operates as a TDD band, and the third band operates as an FDD band.

In a possible implementation, the first band and the third band are coplanar at the base station.

In a possible implementation, the method further includes: The base station may receive, through the second band, an uplink signal sent by the terminal; or the base station may send a downlink signal to the terminal through the first band and/or the second band.

According to a second aspect, this application provides a resource allocation method, applied to a terminal, and the method includes: sending band information to a base station, where the band information is used to indicate band types supported by the terminal, and the band types include a first band and one or more second bands; receiving configuration information returned by the base station based on band types supported by the terminal, where the configuration information is used to indicate to allocate the first band and the second band to the terminal, and indicate the first band to operate in a supplemental downlink (SDL) mode, where the second band is different from the first band and a third band, and the third band is a band that causes interference to an uplink signal if the uplink signal is on the first band; and performing data transmission with the base station based on the configuration information.

In a possible implementation, the configuration information includes uplink and downlink slot assignment information of the first band.

In a possible implementation, the configuration information includes carrier configuration information indicating that the second band is a primary carrier and the first band is a secondary carrier.

In a possible implementation, the first band operates as a TDD band, and the third band operates as an FDD band.

In a possible implementation, the first band and the third band are coplanar at the base station.

In a possible implementation, the performing data transmission with the base station based on the configuration information may specifically include: The terminal may send an uplink signal to the base station through the second band; and the terminal may receive, through the first band and/or the second band, a downlink signal sent by the base station.

According to a third aspect, this application provides a base station, including: a receiving module, configured to receive band information sent by a terminal, where the band information is used to indicate band type supported by the terminal; and a sending module, configured to send configuration information to the terminal if it is detected that the band information indicates that the band types supported by the terminal include a first band and one or more second bands, where the configuration information is used to indicate to allocate the first band and the second band to the terminal, and the configuration information indicates the first band to operate in a supplemental downlink (SDL) mode, where the second band is different from the first band and a third band, and the third band is a band that causes interference to an uplink signal if the uplink signal is on the first band.

In a possible implementation, the configuration information includes uplink and downlink slot assignment information of the first band.

In a possible implementation, the configuration information includes carrier configuration information indicating that the second band is a primary carrier and the first band is a secondary carrier.

In a possible implementation, the first band operates as a TDD band, and the third band operates as an FDD band.

In a possible implementation, the first band and the third band are coplanar at the base station.

In a possible implementation, the receiving module may be further configured to receive, through the second band, an uplink signal sent by the terminal; or the sending module may be further configured to send a downlink signal to the terminal through the first band and/or the second band.

According to a fourth aspect, this application provides a terminal, including a sending module and a receiving module. The sending module is configured to send band information to a terminal, where the band information is used to indicate band types supported by the terminal, and the band types include a first band and one or more second bands. The receiving module is configured to receive configuration information returned by the terminal based on band types supported by the terminal, where the configuration information is used to indicate to allocate the first band and the second band to the terminal, and indicate the first band to operate in a supplemental downlink (SDL) mode, where the second band is different from the first band and a third band, and the third band is a band that causes interference to an uplink signal if the uplink signal is on the first band. The sending module may be further configured to send data to the base station based on the configuration information; and the receiving module may be further configured to receive, based on the configuration information, the data sent by the base station.

In a possible implementation, the configuration information includes uplink and downlink slot assignment information of the first band.

In a possible implementation, the configuration information includes carrier configuration information indicating that the second band is a primary carrier and the first band is a secondary carrier.

In a possible implementation, the first band operates as a TDD band, and the third band operates as an FDD band.

In a possible implementation, the first band and the third band are coplanar at the base station.

In a possible implementation, the sending module may be further configured to send an uplink signal to the base station through the second band; and the receiving module may be further configured to receive, through the first band and/or the second band, a downlink signal sent by the base station.

According to a fifth aspect, this application provides a base station, including a transceiver/transceiver pin and a processor, and optionally, further including a memory. The transceiver/transceiver pin, the processor, and the memory communicate with each other through an internal connection path; the processor is configured to execute instructions to control the transceiver/transceiver pin to send or receive a signal; and the memory is configured to store instructions. When the processor executes the instructions, the processor performs the method according to any one of the first aspect or the possible implementations of the first aspect.

According to a sixth aspect, this application provides a terminal, including a transceiver/transceiver pin and a processor, and optionally, further including a memory. The transceiver/transceiver pin, the processor, and the memory communicate with each other through an internal connection path; the processor is configured to execute instructions to control the transceiver/transceiver pin to send or receive a signal; and the memory is configured to store instructions. When the processor executes the instructions, the processor performs the method according to any one of the second aspect or the possible implementations of the second aspect.

According to a seventh aspect, this application provides a computer-readable medium, configured to store a computer program, where the computer program includes instructions used to perform the method according to any one of the first aspect or the possible implementations of the first aspect.

According to an eighth aspect, this application provides a computer-readable medium, configured to store a computer program, where the computer program includes instructions used to perform the method according to any one of the second aspect or the possible implementations of the second aspect.

According to a ninth aspect, this application provides a computer program, where the computer program includes instructions used to perform the method according to any one of the first aspect or the possible implementations of the first aspect.

According to a tenth aspect, this application provides a computer program, where the computer program includes instructions used to perform the method according to any one of the second aspect or the possible implementations of the second aspect.

According to an eleventh aspect, this application provides a chip, where the chip includes a processing circuit and a transceiver pin. The transceiver pin and the processor communicate with each other through an internal connection path. The processor performs the method according to any one of the first aspect or the possible implementations of the first aspect, to control the receive pin to receive a signal, and control the transmit pin to send a signal.

According to a twelfth aspect, this application provides a chip, where the chip includes a processing circuit and a transceiver pin. The transceiver pin and the processor communicate with each other through an internal connection path. The processor performs the method according to any one of the second aspect or the possible implementations of the second aspect, to control the receive pin to receive a signal, and control the transmit pin to send a signal.

According to a thirteenth aspect, this application provides a system. The system includes the base station and the terminal according to the first aspect and the second aspect.

### BRIEF DESCRIPTION OF DRAWINGS

To describe the technical solutions in the embodiments of this application more clearly, the following briefly describes the accompanying drawings used in describing the embodiments of this application. Apparently, the accompanying drawings in the following description show merely some embodiments of this application, and a person of ordinary skill in the art may still derive other drawings from these accompanying drawings without creative efforts.
FIG. 1 is a schematic diagram of a communications system according to this application;
FIG. 2a is a schematic structural diagram of a base station according to this application:
FIG. 2b is a schematic structural diagram of a terminal according to this application:
FIG. 3 is a schematic diagram of a scenario according to an example;
FIG. 4 is a schematic diagram of a scenario according to an example;
FIG. 5 is a schematic flowchart of a resource allocation method according to an embodiment of this application;
FIG. 6 is a sequence diagram according to this application:
FIG. 7 is a schematic structural diagram of a base station according to this application:
FIG. 8 is a schematic structural diagram of an RRU according to this application:
FIG. 9 is a schematic structural diagram of a base station according to this application:
FIG. 10 is a schematic structural diagram of a terminal according this application: and
FIG. 11 is a schematic structural diagram of an apparatus according to this application

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The term "and/or" in this specification describes only an association relationship between associated objects and represents that three relationships may exist. For example, A and/or B may represent the following three cases: Only A exists, both A and B exist, and only B exists.

In the specification and claims in the embodiments of this application, the terms "first", "second", and so on are intended to distinguish between different objects but do not indicate a particular order of the objects. For example, a first target object, a second target object, and the like are used to distinguish different target objects, but are not used to describe a specific order of the target objects.

In addition, in the embodiments of this application, the word "exemplary" or "for example" is used to represent giving an example, an illustration, or a description. Any embodiment or design scheme described as an "exemplary" or "for example" in the embodiments of this application should not be explained as being more preferred or having more advantages than another embodiment or design scheme. Exactly, use of the word "exemplary", " for example", or the like is intended to present a relative concept in a specific manner.

In the description of the embodiments of this application, unless otherwise stated, "a plurality of" means two or more than two. For example, a plurality of processing units refer to two or more processing units; and a plurality of systems refer to two or more systems.

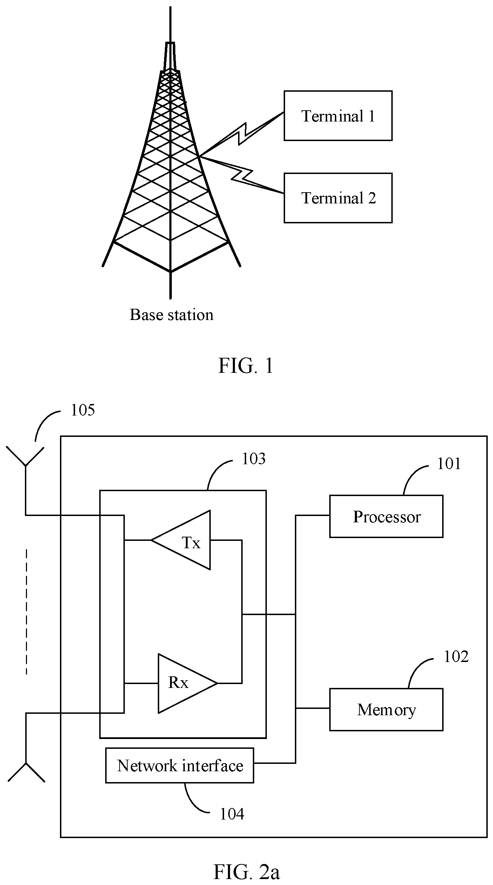

Before the technical solutions in the embodiments of this application are described, a communications system in the embodiments of this application is first described with reference to the accompanying drawings. FIG. 1 is a schematic diagram of a communications system according to this application. The communications system includes a base station, terminal 1, and terminal 2. In a specific implementation process of this application, the terminal may be a device such as a computer, a smartphone, a telephone, a cable television set top box, or a digital subscriber line router. It should be noted that, in actual application, there may be one or more base stations and terminals. The quantities of base stations and terminals in the communications system shown in FIG. 1 are merely an adaptation example. This is not limited in this application.

The communications system may be configured to support a fourth generation (fourth generation, 4G) access technology, for example, a long term evolution (long term evolution, LTE) access technology. Alternatively, the communications system may support a fifth generation (fifth generation, 5G) access technology, for example, a new radio (new radio, NR) access technology. Alternatively, the communications system may be configured to support a third generation (third generation, 3G) access technology, for example, a universal mobile telecommunications system (universal mobile telecommunications system, UMTS) access technology. Alternatively, the communications system may be configured to support a second generation (second generation, 2G) access technology, for example, a global system for mobile communications (global system for mobile communications, GSM) access technology. Alternatively, the communications system may be configured to support a plurality of wireless technologies, for example, an LTE technology and an NR technology. In addition, the communications system is also applicable to a narrow band-internet of things (Narrow Band-Internet of Things, NB-IoT), an enhanced data rate GSM evolution (Enhanced Data rate for GSM Evolution, EDGE) system, a wideband code division multiple access (Wideband Code Division Multiple Access system, WCDMA), a code division multiple access 2000 (Code Division Multiple Access, CDMA2000) system, a time division-synchronization code division multiple access (Time Division-Synchronization Code Division Multiple Access, TD-SCDMA) system, a long term evolution (Long Term Evolution, LTE) system, and a future-oriented communications technology.

In addition, the base station in FIG. 1 may be configured to support terminal access, for example, may be a base transceiver station (base transceiver station, BTS) and a base station controller (base station controller, BSC) in a communications system of a 2G access technology, a NodeB (NodeB) and a radio network controller (radio network controller, RNC) in a communications system of a 3G access technology, and an evolved NodeB (evolved NodeB, eNB) in a communications system of a 4G access technology, a next generation NodeB (next generation NodeB, gNB), a transmission reception point (transmission reception point, TRP), a relay node (relay node), or an access point (access point, AP) in a communications system of a 5G access technology. For ease of description, in all the embodiments of this application, all the apparatuses that provide a wireless communications function for the terminal are referred to as network devices or base stations.

The terminal in FIG. 1 may be a device that provides voice or data connectivity for a user, for example, may also be referred to as a mobile station (mobile station), a subscriber unit (subscriber unit), a station (station), or terminal equipment (terminal equipment, TE). The terminal may be a cellular phone (cellular phone), a personal digital assistant (personal digital assistant, PDA), a wireless modem (modem), a handheld device (handheld), a laptop computer (laptop computer), a cordless phone (cordless phone), a wireless local loop (wireless local loop, WLL) station, a pad (pad), or the like. With development of wireless communications technologies, all devices that can access a communications system, can communicate with a network side of the communications system, or communicate with another object by using the communications system may be terminals in this application, for example, terminals and cars in intelligent transportation, household devices in smart homes, electric meter reading instruments, voltage monitoring instruments, and environment monitoring instruments in smart grids, and video surveillance instruments and cash registers in smart security networks. In this application, the terminal may communicate with a base station, for example, the base station in FIG. 1. A plurality of terminals may also communicate with each other. The terminal may be statically fixed or removable.

FIG. 2a is a schematic structural diagram of a base station.

The base station includes at least one processor 101, at least one memory 102, at least one transceiver 103, at least one network interface 104, and one or more antennas 105. The processor 101, the memory 102, the transceiver 103, and the network interface 104 are connected, for example, by using a bus. The antenna 105 is connected to the transceiver 103. The network interface 104 is configured to enable the base station to be connected to another communications device through a communications link. In this application, the connection may include various interfaces, transmission lines, buses, or the like. This is not limited**.**

The processor in this application, for example, the processor 101, may include at least one of the following types: a general-purpose central processing unit (Central Processing Unit, CPU) or a digital signal processor (Digital Signal Processor, DSP), a microprocessor, an application-specific integrated circuit (Application-Specific Integrated Circuit, ASIC), a microcontroller unit (Microcontroller Unit, MCU), and a field programmable gate array (Field Programmable Gate Array, FPGA) or an integrated circuit configured to implement a logical operation. For example, the processor 101 may be a single-core (single-CPU) processor or a multi-core (multi-CPU) processor. The at least one processor 101 may be integrated into one chip or located on a plurality of different chips.

The memory in this application, for example, the memory 102, may include at least one of the following types: a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (Electrically erasable programmabler-only memory, EEPROM). In some scenarios, the memory may alternatively be a compact disc read-only memory (compact disc read-only memory, CD-ROM) or another optical disk storage and optical disc storage (including compressed optical discs, laser discs, optical discs, digital versatile optical discs, Blu-ray discs, and the like), a magnetic disk storage medium or another magnetic storage device, or any other medium capable of carrying or storing desired program code in a form of an instruction or a data structure and capable of being accessed by a computer, but not limited thereto.

The memory 102 may exist independently, and is connected to the processor 101. Optionally, the memory 102 may alternatively be integrated with the processor 101, for example, integrated into one chip. The memory 102 can store program code for executing the technical solutions in the embodiments of this application, and the processor 101 controls execution of the program code. Various types of computer program code that are executed may also be considered as drivers of the processor 101. For example, the processor 101 is configured to execute the computer program code stored in the memory 102, to implement the technical solutions in the embodiments of this application.

The transceiver 103 may be configured to support receiving or sending of a radio frequency signal between an access network device and a terminal, and the transceiver 103 may be connected to the antenna 105. The transceiver 103 includes a transmitter Tx and a receiver Rx. Specifically, one or more antennas 105 may receive a radio frequency signal, and the receiver Rx in the transceiver 103 is configured to receive the radio frequency signal from the antenna, convert the radio frequency signal into a digital baseband signal or a digital intermediate frequency signal, and provide the digital baseband signal or the digital intermediate frequency signal to the processor 101, so that the processor 101 performs further processing, for example, demodulation processing and decoding processing, on the digital baseband signal or the digital intermediate frequency signal. In addition, the transmitter Tx in the transceiver 103 is further configured to receive a modulated digital baseband signal or digital intermediate frequency signal from the processor 101, convert the modulated digital baseband signal or digital intermediate frequency signal into a radio frequency signal, and send the radio frequency signal through the one or more antennas 105. Specifically, the receiver Rx may selectively perform one or more levels of down-mixing processing and analog-to-digital conversion processing on the radio frequency signal to obtain a digital baseband signal or a digital intermediate frequency signal, and a sequence of the down-mixing processing and the analog-to-digital conversion processing is adjustable. The transmitter Tx may selectively perform one or more levels of up-mixing processing and digital-to-analog conversion processing on the modulated digital baseband signal or the digital intermediate frequency signal to obtain a radio frequency signal, and a sequence of the up-mixing processing and the digital-to-analog conversion processing is adjustable. The digital baseband signal and the digital intermediate frequency signal may be collectively referred to as a digital signal.

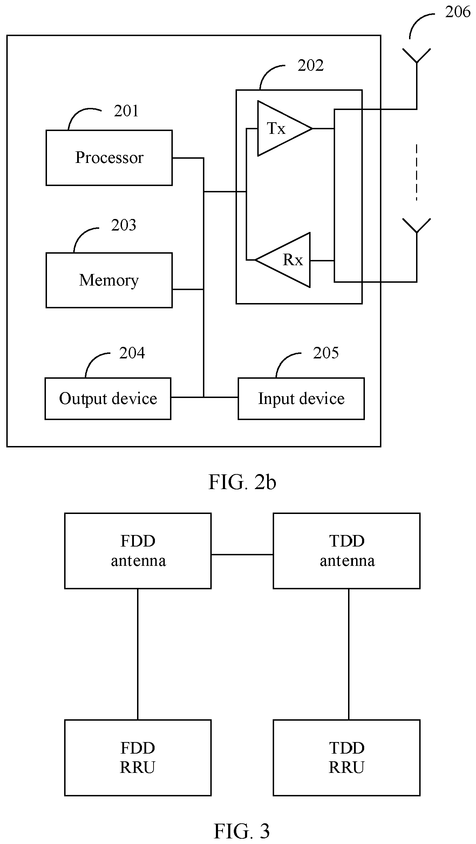

FIG. 2b is a schematic structural diagram of a terminal.

The terminal includes at least one processor 201, at least one transceiver 202, and at least one memory 203. The processor 201, the memory 203, and the transceiver 202 are connected. Optionally, the terminal may further include an output device 204, an input device 205, and one or more antennas 206. The antenna 206 is connected to the transceiver 202, and the output device 204 and the input device 205 are connected to the processor 201.

For the transceiver 202, the memory 203, and the antenna 206, refer to related descriptions in FIG. 2a to implement similar functions.

The processor 201 may be a baseband processor, or may be a CPU. The baseband processor and the CPU may be integrated or separated.

The processor 201 may be configured to implement various functions for the terminal, for example, configured to process a communications protocol and communications data, or configured to control an entire terminal device, execute a software program, and process data of the software program, or configured to assist in completing a computing processing task, for example, processing graphics and images or audio. Alternatively, the processor 201 is configured to implement one or more of the foregoing functions.

The output device 204 communicates with the processor 201, and may display information in a plurality of manners. For example, the output device 204 may be a liquid crystal display (Liquid Crystal Display, LCD), a light emitting diode (Light Emitting Diode, LED) display device, a cathode ray tube (Cathode Ray Tube, CRT) display device, a projector (projector), or the like. The input device 205 communicates with the processor 201, and may receive user input in a plurality of manners. For example, the input device 205 may be a mouse, a keyboard, a touchscreen device, or a sensor device.

Based on the communications system in FIG. 1, currently, there are two provisioning manners for a 2.6 G spectrum in major countries and regions around the world. One is provisioning in a manner of Band 41, where a duplex mode is time division duplex (Time Division Duplexing, TDD) with a frequency range of 2496 MHz to 2690 MHz. The other is provisioning in manners of Band 7 and Band 38, where a duplex mode of Band 7 is frequency division duplex (Frequency Division Duplexing, FDD) with frequency ranges of 2620 MHz to 2690 MHz and 2500 MHz to 2570 MHz; and a duplex mode of Band 38 is time division duplexing with a frequency range of 2570 MHz to 2620 MHz. For the provisioning manners of Band 7 and Band 38, on a base station side, a downlink signal on Band 7 operating in an FDD mode causes interference to an uplink signal on Band 38 operating in a TDD mode. For a terminal side, an uplink signal on Band 7 causes interference to a downlink signal on Band 38.

To resolve the foregoing problem, a spatial isolation manner is usually used in the related art. To be specific, as shown in FIG. 3, a spatial isolation requirement needs to be met between a TDD antenna (for example, an antenna supporting Band 38) and an FDD antenna (for example, an antenna supporting Band 7). Therefore, in the related art, Band 38 and Band 7 cannot implement coplanar (namely, Band 38 and Band 7 share a same antenna plane, or it may be understood that an antenna in a base station (referring to the same base station) supports both Band 38 and Band 7, and the base station may transmit data on both Band 38 and Band 7 through the antenna) deployment. However, in some scenarios with limited antenna planes, technical support cannot be provided in the related art.

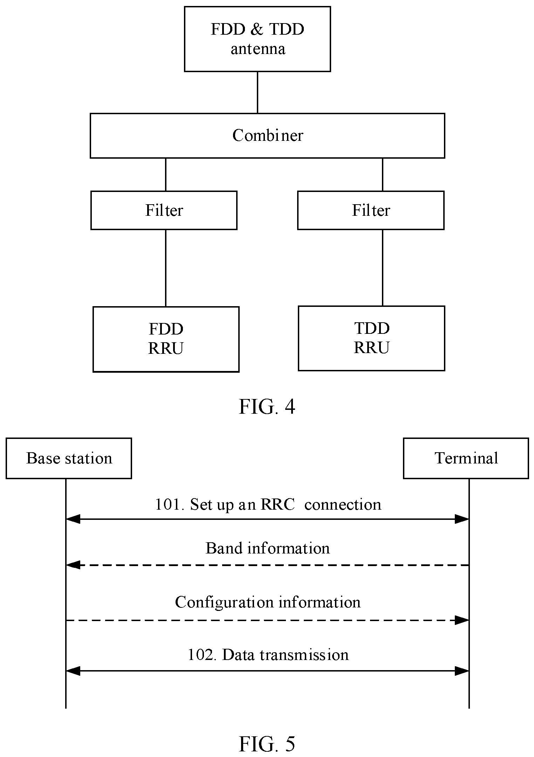

In another related art, a filtering manner is used. To be specific, as shown in FIG. 4, FDD and TDD are deployed on a same antenna plane, and an external filter or another filtering manner is used, or a requirement of out-of-band suppression of a duplexer is improved, to reduce interference between different duplex modes. However, in the related art, an additional component needs to be added or the requirement of out-of-band suppression of the duplexer needs to be provided, and therefore costs are increased.

In conclusion, how to implement coplanar deployment of Band 38 and Band 7 without increasing costs becomes a problem that needs to be urgently resolved.

The embodiments of this application are intended to provide a resource allocation solution, to adapt to multivariate scenarios such as limited antenna planes, so that implementation is simple, and costs can be effectively reduced.

With reference to the schematic diagram of the communications system shown in FIG. 1, a specific implementation solution of this application is described below.

With reference to FIG. 2, FIG. 5 is a schematic flowchart of a resource allocation method according to this application.

Step 101: A base station establishes a radio resource control (Radio Resource Control, RRC) connection to a terminal.

Specifically, in this application, the base station may modify broadcast of a cell that supports a first band, to forbid the terminal to camp on the first band. In other words, the base station modifies specified signaling in the broadcast of the cell that supports the first band, to forbid any terminal to initiate an RRC connection on the first band, and the terminal initiates an RRC connection on another band of the cell.

Specifically, in this application, the terminal accesses the base station, establishes an RRC connection to the base station, and may perform data transmission with the base station after the RRC connection is successfully established. In this application, only a resource allocation part in this application is described in detail in the process in which the terminal establishes the RRC connection to the base station. For configuration parts in other RRC connections, refer to the technical solutions in the embodiments in the related art. Details are not described in this application.

Specifically, in this application, in the process in which the base station establishes the RRC connection to the terminal, the terminal may send band information to the base station. Optionally, in this embodiment of this application, the band information sent by the terminal to the base station includes but is not limited to: information used to indicate band types supported by the terminal and information used to indicate whether the terminal supports carrier aggregation. In this application, the band types include but are not limited to the first band, one or more second bands, and/or a third band. The second band is a band that is not the first band or the third band, and the third band is a band that may cause interference to an uplink signal of the first band.

Optionally, the first band may be a TDD band, and the second band may be an FDD band. For example, the first band may be Band 38 (Band 38 is a TDD band), the third band may be Band 7 (Band 7 is an FDD band), and the second band may be a band that is not Band 38 or Band 7, such as Band 1 or Band 3. In other words, the base station may modify specified signaling in broadcast of a cell, so that the terminal does not camp on Band 38.

For example, as described above, on the base station side, Band 7 operates as an FDD band, and a downlink signal on Band 7 causes interference to an uplink signal on Band 38 (Band 38 is a TDD band). In this application, the first band may be Band 38, the third band may be Band 7, and the second band may be any band N that is not Band 38 or Band 7, such as Band 1 and/or Band 3.

For example, band types supported by terminal 1 include bands Band 38, Band 1, and Band 7. In this case, band information sent by terminal 1 to the base station includes information about the band types. It should be noted that information about bands supported by the terminal is set during delivery or initialization of the terminal. Details are not described in this application.

In addition, in this application, the information that is included in the band information and that is used to indicate whether the terminal supports carrier aggregation is that if the terminal supports carrier aggregation, the band information carries information that the terminal supports carrier aggregation. Conversely, if the terminal does not support carrier aggregation, the band information does not carry any information related to carrier aggregation.

In this application, after the base station receives the band information sent by the terminal, if it is detected that the terminal does not support carrier aggregation, the base station and the terminal perform access procedure based on the access procedure in the embodiments in the related art. If it is detected that the terminal supports carrier aggregation, the procedure in this application continues.

Specifically, in this application, the base station detects that the terminal supports carrier aggregation, and obtains the band types supported by the terminal.

Then, the base station may allocate a corresponding operating band to the terminal based on band types supported by the terminal of the terminal.

In this application, the base station may allocate the operating band to the terminal based on the following rules.
(1) If the terminal supports carrier aggregation on the first band and one or more second bands (the second band is a band that is not the first band or the third band, and a relationship between the third band and the first band is as described above, and is not described herein again), the first band and the second band (which may be one or more) are allocated to the terminal, and the first band operates in an SDL mode. If the second band is one or more bands that are not the first band or the third band, for example, Band 1 and Band 3, the base station may select bands of the one or more second bands for the terminal based on conditions such as load statuses of the bands, and allocate the bands together with the first band to the terminal. For example, if the terminal supports carrier aggregation on Band 38 and Band N (N is a positive integer that is not 38 or 7. For example, Band N may be Band 1 and Band 3, namely, Band N may be one or more bands that are not Band 38 and Band 7), Band 38 and Band N are allocated to the terminal, and Band 38 operates in an SDL mode. If Band N is one or more bands that are not Band 38 and Band 7, such as Band 1 and Band 3, the base station may select bands of the one or more Bands N for the terminal based on conditions such as load statuses of the bands, and allocate the bands together with Band 38 to the terminal. For example, the base station may allocate Band 1, Band 3, and Band 38 to terminal 1, or may allocate Band 1 and Band 38 to terminal 1.
(2) If the terminal supports the first band, the second band, and the third band, the base station may allocate the third band and/or the second band to the terminal or allocate a combination of the first band and the second band to the terminal based on conditions such as load statuses of the bands. When the third band or the second band or both are allocated to the terminal, setting may be performed based on the related art. The combination of the first band and the second band is similar to that in (1), namely, the first band operates in an SDL mode. For example, if the terminal supports Band 38, Band 7, and Band N, the base station may allocate Band 7 and/or Band N to the terminal or allocate a combination of Band 38 and Band N to the terminal based on conditions such as load statuses of the bands. When Band 7 or Band N or both are allocated to the terminal, setting may be performed based on the related art. The combination of Band 38 and Band N is similar to that in (1), namely, Band 38 operates in an SDL mode. For example, if terminal 1 supports Band 7, Band 38, and Band 1, and terminal 2 supports Band 7 and Band 3, the base station may allocate Band 38 and Band 1 to terminal 1, and allocate Band 7 or Band 3 to terminal 2.

Based on the foregoing allocation manner, the base station allocates a corresponding band or band combination to each terminal based on band types supported by the terminal of bands supported by the terminal and conditions such as load statuses of the current bands. The band combination includes one or more bands, and if the band combination includes a first band, the first band operates in an SDL mode. For example, on the base station side, if there are a plurality of terminals, and some terminals may support Band 7 and/or Band N, some terminals may support Band 38 and Band N, and/or some terminals may support Band 38, Band 7, and Band N (where all the terminals support carrier aggregation), the base station allocates a corresponding band or band combination to each terminal based on band types supported by the terminal of bands supported by the terminal and conditions such as load statuses of the current bands. The band combination includes one or more bands, and if the band combination includes Band 38, Band 38 operates in an SDL mode.

Therefore, in this application, based on this allocation manner, because Band 38 operates in an SDL mode, when a terminal operating in Band 7 exists on the base station side, for the base station side, a downlink signal sent by the base station on Band 7 does not cause any interference to Band 38. The reason is that Band 38 operates in an SDL mode. In other words, there is no uplink signal on Band 38. Therefore, the downlink signal on Band 7 operating in an FDD mode does not cause any interference to the uplink signal on Band 38 operating in a TDD mode. However, for the terminal that supports Band 38, the terminal does not send the uplink signal on Band 38. In addition, Band 38 and Band 7 do not appear in a same band combination. In other words, for the terminal, Band 38 and Band 7 are not simultaneously enabled. Therefore, a problem that the uplink signal on Band 7 causes interference to the downlink signal on Band 38 does not occur on the terminal side, so that an interference suppression effect on the terminal side is further improved.

Still referring to FIG. 5, in this application, after determining allocated bands for the terminal, the base station may send configuration information to the terminal, to notify the terminal of the bands allocated to the terminal.

Specifically, in this application, the base station sends RRC signaling to the terminal, to carry the configuration information in this application by using a specified information element in the RRC signaling. Specifically, in this application, the configuration information includes but is not limited to information such as primary carrier information, secondary carrier information, and an uplink and downlink slot assignment.

Optionally, in this application, if the base station determines that band resources allocated to the terminal are the first band and the second band, the configuration information sent by the base station to the terminal includes information used to indicate to perform carrier aggregation on the first band and the second band, the first band is a primary carrier, and the second band is a secondary carrier, where the second band operates in an SDL mode, and the configuration information may further include information such as an uplink and downlink slot assignment of the second band. For example, if band resources to be allocated by the base station to the terminal include Band 38 and Band 1, the configuration information sent by the base station to the terminal may include information used to indicate to perform carrier aggregation on Band 38 and Band 1, Band 1 is a primary carrier, and Band 38 is a secondary carrier, and information such as an uplink and downlink slot assignment of Band 38. It should be noted that, for a terminal not in this application, namely, a terminal that does not support Band 38, RRC signaling may be exchanged according to specifications in the embodiments in the related art. Details are not described again in this application.

Optionally, the base station may add a secondary carrier and related information of the secondary carrier by setting RRC connection reconfiguration (RRCConnectionReconfiguration) signaling. The signaling includes an information element sCellToAddModList, and the information element sCellToAddModList further includes an information element radioResourceConfigCommonSCell and an information element radioResourceConfigDedicatedSCell. The information element sCellToAddModList is the configuration information in this application, and may be used to add the secondary carrier and the related information. The information element radioResourceConfigCommonSCell may carry common information, and the common information includes but is not limited to information such as a bandwidth and an uplink and downlink slot assignment of the secondary carrier. The information element radioResourceConfigDedicatedSCell may be used to carry dedicated information, and the dedicated information includes but is not limited to downlink power allocation information and the like. It should be noted that, the base station sets a primary carrier in a manner same as that in the related art, namely, by adding related information of the primary carrier (including information such as identification information, bandwidth information, and an uplink and downlink slot assignment of the primary carrier. For details, refer to solutions in the embodiments in the related art. Details are not described in this application) to the specified information element. The base station may notify, by using the RRC connection reconfiguration signaling, the terminal of the primary carrier to be allocated to the terminal, related information of the primary carrier, and related information of the secondary carrier.

It should be noted that, in this application, the base station may set the secondary carrier and related information, namely, indicate, in the RRC signaling, the primary carrier and the secondary carrier that are allocated by the terminal to the base station, and performs carrier aggregation on the primary carrier and the secondary carrier, to indicate the secondary carrier (namely, Band 38) on which uplink carrier aggregation has not been performed to operate in a supplemental downlink (Supplemental Downlink, SDL) mode. In other words, it is specified in a protocol that the secondary carrier in the carrier aggregation is a downlink secondary carrier.

Still referring to FIG. 5, after receiving the configuration information sent by the base station, the terminal receives, based on the bands allocated by the base station to the terminal and the operating modes corresponding to the bands (the operating mode corresponding to the band refers to a primary carrier or a secondary carrier, and the secondary carrier is a carrier operating in an SDL mode) to set local carrier configuration. After the setting is completed, the terminal returns response information to the base station, to notify the base station that the carrier configuration is successful.

For example, if the bands allocated by the base station to terminal 1 are: Band 1 (namely, the second band in this application) is a primary carrier, and Band 38 (namely, the first band in this application) is a secondary carrier (namely, Band 38 operates in an SDL mode), after receiving the configuration information sent by the base station, the terminal locally caches the foregoing information, to record a band on which the terminal currently operates and related information (information such as a bandwidth and an uplink and downlink slot assignment) of the band, and modify the local configuration based on the foregoing content.

Step 102: The base station performs data transmission with the terminal.

Specifically, in this application, after receiving the response information returned by the terminal, the base station may determine that RRC setup is successful (another configuration process is further required in an RRC setup process. For details, refer to solutions in the embodiments in the related art. Details are not described in this application). Then, the base station may perform data transmission with the successfully accessed terminal. In other words, the base station may transmit the downlink signal to the terminal on the band resources allocated to the terminal, or receive, on the band resources allocated to the terminal, the uplink signal transmitted by the terminal. If the band resources allocated by the base station to the terminal are the first band and the second band, and carrier aggregation is performed on the first band and the second band (the first band is a primary carrier and the second band is a secondary carrier and operates in an SDL mode.), the base station transmits the downlink signal on the first band and/or the second band, and receives the uplink signal on the second band. The terminal receives the downlink signal on the first band and/or the second band, and sends the uplink signal on the second band.

To make a person skilled in the art better understand the technical solutions in the embodiments of this application, a data transmission process is described in detail below by using specific embodiments.

For example, the bands allocated by the base station to terminal 1 are Band 38 and Band 1. Specifically, the base station allocates Band 38 and Band 1 to terminal 1 as operating bands corresponding to terminal 1, and performs carrier aggregation on Band 38 and Band 1. Band 1 is used as a primary carrier, and Band 38 is used as a secondary carrier, namely, Band 38 operates in an SDL mode.

On the base station side, the base station may transmit, on Band 1 and/or Band 38, a downlink signal corresponding to terminal 1, and receive an uplink signal of terminal 1 on Band 1.

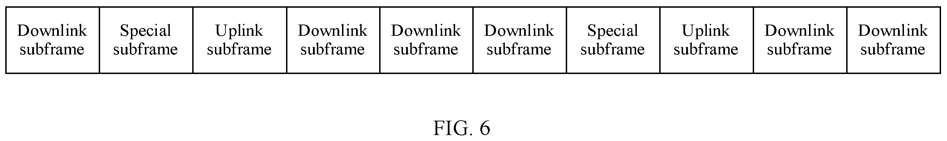

On the terminal side, terminal 1 may transmit an uplink signal on Band 1, and receive, on Band 1 and/or Band 38, a downlink signal transmitted by the base station. FIG. 6 is a sequence diagram of Band 38 (the sequence diagram indicates uplink and downlink slot assignment information of Band 38), where an uplink and downlink slot assignment in FIG. 6 is 2. The uplink and downlink slot assignment in FIG. 6 is merely an exemplary example. This is not limited in this application. Based on an infinite frame structure in FIG. 6, the base station may transmit a downlink signal in a downlink subframe on Band 38, the base station does not schedule an uplink subframe on Band 38, and the terminal also does not send an uplink signal in the uplink subframe on Band 38.

In conclusion, in this application, carrier aggregation is performed on the first band operating in a TDD mode and the second band, and the first band operates in an SDL mode, so that a downlink signal on the third band operating in an FDD mode does not cause interference to the first band. Therefore, a resource allocation solution adaptable to multivariate scenarios such as limited antenna planes is provided, so that implementation is simple, and costs can be effectively reduced.

Based on the technical solutions in the embodiments of this application, a schematic structural diagram of a base station shown in the figure may be implemented.

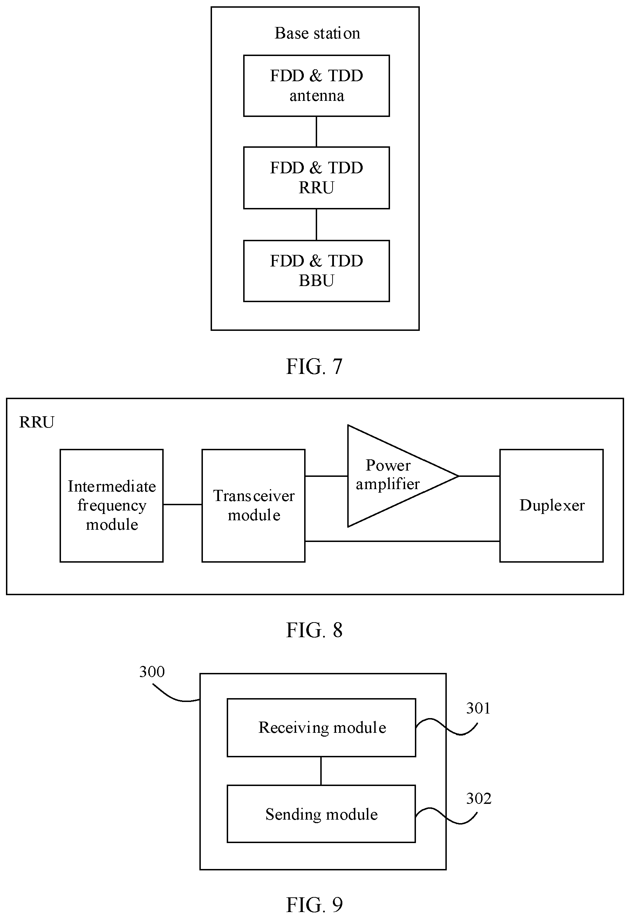

FIG. 7 is a schematic structural diagram of a base station according to this application

Based on the base station structure in FIG. 2a, the base station structure is further expanded. In this application, the base station may include one or more radio frequency units, such as a remote radio unit (remote radio unit, RRU) and one or more baseband units (baseband units, BBUs) (also referred to as digital units, digital units, DUs), and one or more antennas. Both the RRU and the BBU support a first band (for example, Band 38) and a second band (for example, Band 7), or it may be understood that both the RRU and the BBU support a TDD band and an FDD band. In addition, in this application, the RRU may be referred to as a transceiver unit, a transceiver, a transceiver circuit, or the like. The RRU part is mainly configured to send and receive a radio frequency signal and convert the radio frequency signal to a baseband signal, for example, configured to send the downlink signal or configuration information described in the foregoing to a terminal device. In addition, in this application, the second band in an FDD mode does not cause interference to the first band in a TDD mode (as described above, there is no uplink signal on the first band in a TDD mode, and therefore, the FDD band does not cause uplink interference to the TDD band). Therefore, the first band and the second band (namely, the second band and the first band affected by interference from the second band) may share a PA. Therefore, in this application, the first band and the second band may be co-planar, and the base station shown in FIG. 7 can be implemented without any additional filtering device. An antenna of the base station is a TDD & FDD antenna. In this application, a schematic structural diagram of the RRU in the base station is shown in FIG. 8. The RRU includes an intermediate frequency module, a transceiver module, a power amplifier (Power Amplifier, PA), and a duplexer. In this application, the base station sets the second band, for example, Band 38, as a secondary carrier in carrier aggregation, namely, Band 38 operates in an SDL mode. Therefore, a problem that the second band (for example, Band 7) causes interference to an uplink signal of Band 38 does not occur. Therefore, in this application, the first band and the second band (for example, Band 38 and Band 7) may share a PA. Optionally, the first band and the second band (for example, Band 38 and Band 7) may be set to share an output port. Correspondingly, the first band and the second band on the base station side may be coplanar (namely, Band 38 and Band 7 share an antenna plane). It should be noted that, in this application, as described above, the base station does not allocate both a third band and the first band to the terminal. Therefore, a problem that an uplink signal on the third band (for example, Band 7) causes interference to a downlink signal on the first band (for example, Band 38) does not occur on the terminal side. Therefore, the first band and the third band may also be coplanar by using an antenna (not shown in the figure) on the terminal side, and no additional filtering device needs to be added.

In addition, in this application, the RRU supports the first band and the second band (for example, Band 7 and Band 38). It should be noted that, the base station in this application may include one or more RRUs. For example, the RRU shown in FIG. 7 supports Band 7 and Band 38. In other words, Band 7 and Band 38 may share a PA. Optionally, Band 7 and Band 38 may share an output port, and the base station may further include one or more RRUs that support the second band (for example, Band 1 and/or Band 3). Optionally, a downlink frequency range supported by the duplexer may include downlink frequency ranges of Band 7 and Band 38, and an uplink frequency range supported by the duplexer may include an uplink frequency range of Band 7.

A reserved band may be set to reduce an index requirement on the duplexer. For example, if the downlink frequency range of the duplexer is 2590 MHz to 2670 MHz, the uplink frequency range is 2500 MHz to 2550 MHz, and a guard bandwidth of 40 MHz is expected to be set, an uplink and downlink frequency spacing of the duplexer is 2550 MHz to 2590 MHz. The guard bandwidth is set to reduce an index requirement on out-of-band suppression of the duplexer, thereby further reducing costs of the RRU.

The BBU part is mainly configured to perform baseband processing, control the base station, and the like. The RRU and the BBU may be physically disposed together, or may be physically disposed separately, namely, the base station is a distributed base station. In this application, the BBU supports at least Band 7. Band 38, and Band N, and the BBU supports carrier aggregation.

The BBU is a control center of the base station, may also be referred to as a processing unit, and is mainly configured to complete baseband processing functions, such as channel coding, multiplexing, modulation, and spreading. For example, the BBU (processing unit) may be configured to control the base station to perform an operation procedure related to a network device in the foregoing method.

In an example, the BBU may include one or more boards, and a plurality of boards may jointly support a radio access network (for example, an LTE network) with a single access indication, or may separately support radio access networks (for example, an LTE network, a 5G network, or another network) of different access standards. The BBU further includes a memory and a processor, and the memory is configured to store necessary instructions and data. The processor is configured to control the base station to perform a necessary action. For example, in this application, the BBU may be configured to control the terminal not to camp on Band 38, and is further configured to control the terminal not to send an uplink signal on an uplink subframe of Band 38. In other words, the BBU may be configured to send the RRC signaling that carries the configuration information in this application, to indicate the terminal not to perform an RRC connection on Band 38, and Band 38 is a secondary carrier that operates in an SDL mode.

The foregoing mainly describes the solutions provided in the embodiments of this application from a perspective of interaction between network elements. It may be understood that, to implement the foregoing functions, the base station or the terminal includes a corresponding hardware structure and/or software module for performing each function. A person skilled in the art should be easily aware that, in combination with the examples described in the embodiments disclosed in this specification, units, algorithms, and steps may be implemented by hardware or a combination of hardware and computer software in the embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this application, function module division may be performed on the base station or the terminal based on the foregoing method examples. For example, each function module may be obtained through division corresponding to each function, or two or more functions may be integrated into one processing module. The integrated module may be implemented in a form of hardware, or may be implemented in a form of a software functional module. It should be noted that, in the embodiments of this application, division into the modules is exemplary, and is merely logical function division. During actual implementation, another division manner may be used.

When each function module is obtained through division corresponding to each function, and when each function module is obtained through division corresponding to each function, FIG. 9 is a possible schematic structural diagram of a base station 300 in the foregoing. As shown in FIG. 9, the base station may include: a receiving module 301 and a sending module 302. The receiving module 301 may be used in the step of "receiving band information sent by the terminal". For example, the module may be configured to support the base station in performing the related step in step 101 in the foregoing method The sending module 302 may be used in the step of "sending the configuration information to the terminal if it is detected that the band information indicates that band types supported by the terminal include Band 38 and one or more bands N that are not Band 38 and Band 7". For example, the module may be configured to support the base station in performing the related step in step 101 in the foregoing method.

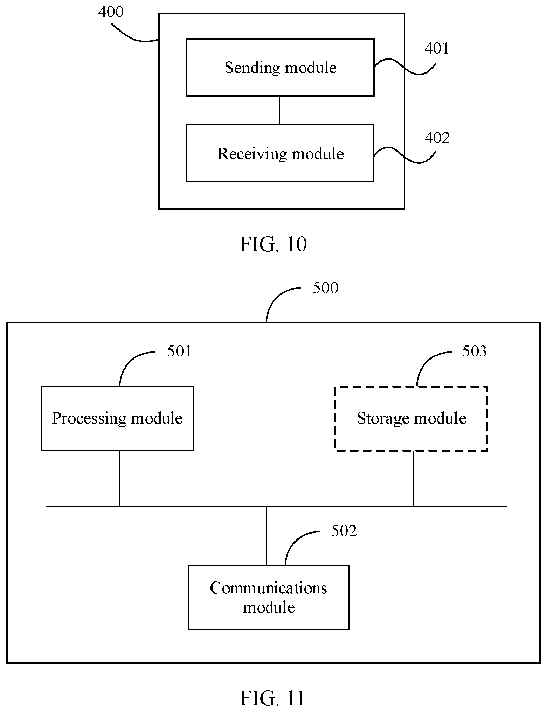

FIG. 10 is a possible schematic structural diagram of a terminal 400 in the foregoing. As shown in FIG. 10, the terminal 400 may include a sending module 401, a receiving module 402, and a data transmission module 403. The sending module 401 may be used in the step of "sending band information to a base station". For example, the module may be configured to support the terminal in performing the related step in step 101 in the foregoing method. The receiving module 402 may be used in the step of "receiving configuration information returned by the base station based on band types supported by the terminal". For example, the module may be configured to support the base station in performing the related step in step 101 in the foregoing method. In this application, the sending module 401 may be further used in the step of "sending data to the base station based on the configuration information". For example, the module may be configured to support the terminal in performing the related step in step 102 in the foregoing method. The receiving module 402 may be further used in the step of "receiving, based on the configuration information, the data sent by the base station". For example, the module may be configured to support the terminal in performing the related step in step 102 in the foregoing method.

The following describes an apparatus provided in this application. As shown in FIG. 11,

The apparatus includes a processing module 501 and a communications module 502. Optionally, the apparatus further includes a storage module 503. The processing module 501, the communications module 502, and the storage module 503 are connected by using a communications bus.

The communications module 502 may be an apparatus having a transceiver function, and is configured to communicate with another network device or a communications network.

The storage module 503 may include one or more memories, and the memory may be a component that is in one or more devices or circuits and that is configured to store a program or data.

The storage module 503 may exist independently, and is connected to the processing module 501 by using a communications bus. Alternatively, the storage module may be integrated with the processing module 501.

An apparatus 500 may be used in a network device, a circuit, a hardware component, or a chip.

The apparatus 500 may be a terminal in this application, for example, terminal 1 or terminal 2. A schematic diagram of the terminal may be shown in FIG. 2b. Optionally, the communications module 502 of the apparatus 500 may include an antenna and a transceiver of the terminal, for example, an antenna 104 and a transceiver 102 in FIG. 2b. Optionally, the communications module 502 may further include an output device and an input device, for example, an output device 204 and an input device 205 in FIG. 2b.

The apparatus 500 may be a chip in the terminal in this application. The communications module 502 may be an input or output interface, a pin, a circuit, or the like. Optionally, the storage module may store computer executable instructions of the method on the terminal side, so that the processing module 501 performs the method on the terminal side in the foregoing. The storage module 503 may be a register, a cache, a RAM, or the like, and the storage module 503 may be integrated with the processing module 501. The storage module 503 may be a ROM or another type of static storage device that may store static information and instructions, and the storage module 503 may be independent of the processing module 501. Optionally, with development of a wireless communications technology, a transceiver may be integrated on the apparatus 500. For example, the communications module 502 integrates the transceiver 202.

When the apparatus 500 is the terminal or the chip in the terminal in this application, the apparatus 500 can implement the method performed by a signal forwarding device in the foregoing. For details, refer to related content in FIG. 5, FIG. 6, and FIG. 7. Details are not described herein again.

The apparatus 500 may be a base station in this application. A schematic diagram of the base station may be shown in FIG. 2a. Optionally, the communications module 502 of the apparatus 500 may include an antenna and a transceiver of the base station, for example, the antenna 105 and the transceiver 103 in FIG. 2a. The communications module 502 may further include a network interface of the base station, for example, the network interface 104 in FIG. 2a.

The apparatus 500 may be a chip in the base station in this application. The communications module 502 may be an input or output interface, a pin, a circuit, or the like. Optionally, the storage module may store computer executable instructions of the method on the base station side, so that the processing module 501 performs the method on the base station side in the foregoing. The storage module 503 may be a register, a cache, a RAM, or the like, and the storage module 503 may be integrated with the processing module 501. The storage module 503 may be a ROM or another type of static storage device that may store static information and instructions, and the storage module 503 may be independent of the processing module 501. Optionally, with development of a wireless communications technology, a transceiver may be integrated on the apparatus 500. For example, the communications module 502 integrates the transceiver 103 and the network interface 104.

When the apparatus 500 is the base station or the chip in the base station in the embodiments of this application, the apparatus 500 can implement the method performed by the base station in the foregoing For details, refer to related content in FIG. 5, FIG. 6, and FIG. 7. Details are not described herein again.

This application further provides a computer-readable storage medium. All or some of the methods described in the foregoing embodiments may be implemented by using software, hardware, firmware, or any combination thereof. If implemented in software, the function may be stored as one or more instructions or code on the computer-readable medium or transmitted on a computer-readable medium. The computer-readable medium may include a computer storage medium and a communications medium, and may further include any medium capable of transferring a computer program from one place to another. The storage medium may be any available medium accessible to a computer.

In an optional design, the computer-readable medium may include a RAM, a ROM, an EEPROM, a CD-ROM or another optical disc memory, a magnetic disk memory or another magnetic storage device, or any other medium that may be used for carrying or required program code is stored in a form of an instruction or a data structure, and is accessible to a computer. In addition, any connection may be appropriately referred to as a computer-readable medium. For example, if software is transmitted from a website, a server, or another remote source by using a coaxial cable, a fiber optical cable, a twisted pair, a digital subscriber line (DSL), or wireless technologies (for example, infrared ray, radio, and microwave), the coaxial cable, the fiber optical cable, the twisted pair, the DSL, or the wireless technologies such as infrared ray, radio and microwave are included in the definition of a medium. Disks and discs as used herein include optical discs (CDs), laser discs, optical discs, digital versatile discs (DVDs), floppy disks, and Blu-ray discs, where disks typically reproduce data magnetically, and discs reproduce data optically using lasers. The combination described above should also be included in the scope of the computer-readable medium.

This application further provides a computer program product. All or some of the methods described in the foregoing embodiments may be implemented by using software, hardware, firmware, or any combination thereof. If implemented in software, it may be implemented completely or partially in the form of a computer program product. The computer program product includes one or more computer instructions. When the foregoing computer program instructions are loaded and executed on the computer, the procedure or functions described according to the foregoing method embodiments are all or partially generated. The foregoing computer may be a general-purpose computer, a dedicated computer, a computer network, a network device, a user device, or other programmable apparatuses.

The embodiments of this application are described above with reference to the accompanying drawings. However, this application is not limited to the foregoing specific implementations. The foregoing specific implementations are merely exemplary rather than limiting. A person of ordinary skill in the art, under the teachings of this application, can make many forms without departing from the scope of the purpose and claims of this application, which fall within the protection of this application.

## Claims

1. A resource allocation method, applied to a base station (300), wherein the method comprises:
receiving band information from a terminal (400), wherein the band information is used to indicate band types supported by the terminal (400); and
sending configuration information to the terminal (400) if it is detected that the band information indicates that the band types supported by the terminal (400) comprise a first band and one or more second bands, wherein the configuration information is used to indicate to allocate the first band and the second band to the terminal (400), and the configuration information indicates the first band to operate in a supplemental downlink, SDL, mode, wherein
the second band is different from the first band and a third band, the third band is a band that causes interference to an uplink signal if the uplink signal is on the first band, the first band operates as a time division multiplexing, TDD, band, and the third band operates as a frequency division multiplexing, FDD, band, and the first and the third band are coplanar at the base station (300); and
the configuration information comprises uplink and downlink slot assignment information of the first band and carrier configuration information indicating that the second band is a primary carrier and the first band is a secondary carrier.

2. The method according to claim 1, wherein the method further comprises:
receiving, through the second band, an uplink signal sent by the terminal (400); or
sending a downlink signal to the terminal (400) through the first band and/or the second band.

3. A resource allocation method, applied to a terminal (400), wherein the method comprises:
sending band information to a base station (300), wherein the band information is used to indicate band types supported by the terminal (400), and the band types comprise a first band and one or more second bands;
receiving configuration information returned by the base station (300) based on the band types supported by the terminal (400), wherein the configuration information is used to indicate to allocate the first band and the second band to the terminal (400), and indicates the first band to operate in a supplemental downlink, SDL, mode, wherein the second band is different from the first band and a third band, the third band is a band that causes interference to an uplink signal if the uplink signal is on the first band, the first band operates as a time division multiplexing, TDD, band, and the third band operates as a frequency division multiplexing, FDD, band, and the first band and the third band are coplanar at the base station (300); and
performing data transmission with the base station (300) based on the configuration information, wherein
the configuration information comprises uplink and downlink slot assignment information of the first band and carrier configuration information indicating that the second band is a primary carrier and the first band is a secondary carrier.

4. The method according to claim 3, wherein the performing data transmission with the base station (300) based on the configuration information specifically comprises:
sending an uplink signal to the base station (300) through the second band; or
receiving, through the first band and/or the second band, a downlink signal from the base station (300).

5. A base station comprising means adapted to carry out the steps of the method according to any one of claims 1 to 2.

6. A terminal comprising means adapted to carry out the steps of the method according to any one of claims 3 to 4.

7. A computer program product, comprising computer program code which, when executed by a processor of an apparatus, cause the apparatus to carry out the steps of the method according to any one of claims 1 to 4.

8. A computer-readable storage medium, wherein the computer-readable storage medium stores a computer program, the computer program comprises at least one segment of code, and the at least one segment of code may be executed by a communication apparatus, to control the communication apparatus to perform the method according to any one of claims 1 to 4.

## Patentansprüche

1. Ressourcenzuweisungsverfahren, das auf eine Basisstation (300) angewendet wird, wobei das Verfahren Folgendes umfasst:
Empfangen von Bandinformationen von einem Endgerät (400), wobei die Bandinformationen verwendet werden, um von dem Endgerät (400) unterstützte Bandtypen anzuzeigen; und
Senden von Konfigurationsinformationen an das Endgerät (400), wenn erkannt wird, dass die Bandinformationen angeben, dass die von dem Endgerät (400) unterstützten Bandtypen ein erstes Band und ein oder mehrere zweite Bänder umfassen, wobei die Konfigurationsinformationen verwendet werden, um anzugeben, dass das erste Band und das zweite Band dem Endgerät (400) zugewiesen werden, und die Konfigurationsinformationen angeben, dass das erste Band in einem ergänzenden Abwärtsverbindungsmodus, SDL, betrieben wird, wobei
sich das zweite Band von dem ersten Band und einem dritten Band unterscheidet, das dritte Band ein Band ist, das Interferenzen mit einem Uplink-Signal verursacht, wenn das Uplink-Signal auf dem ersten Band ist, das erste Band als ein Zeitmultiplex-Band, TDD, arbeitet und das dritte Band als ein Frequenzmultiplex-Band, FDD, arbeitet, und das erste und das dritte Band an der Basisstation (300) koplanar sind; und
die Konfigurationsinformationen Informationen über die Übertragung von Uplink- und Downlink-Schlitzen des ersten Bandes und Trägerkonfigurationsinformationen umfassen, die anzeigen, dass das zweite Band ein primärer Träger und das erste Band ein sekundärer Träger ist.

2. Verfahren nach Anspruch 1, wobei das Verfahren ferner Folgendes umfasst:
Empfangen eines von dem Endgerät (400) gesendeten Uplink-Signals über das zweite Band; oder
Senden eines Downlink-Signals an das Endgerät (400) über das erste Band und/oder das zweite Band.

3. Ressourcenzuweisungsverfahren, das auf ein Endgerät (400) angewendet wird, wobei das Verfahren Folgendes umfasst:
Senden von Bandinformationen an eine Basisstation (300), wobei die Bandinformationen verwendet werden, um von dem Endgerät (400) unterstützte Bandtypen anzuzeigen, und die Bandtypen ein erstes Band und ein oder mehrere zweite Bänder umfassen;
Empfangen von Konfigurationsinformationen, die von der Basisstation (300) auf der Grundlage der von dem Endgerät (400) unterstützten Bandtypen zurückgegeben werden, wobei die Konfigurationsinformationen verwendet werden, um anzugeben, dass das erste Band und das zweite Band dem Endgerät (400) zugewiesen werden, und angeben, dass das erste Band in einem zusätzlichen ergänzenden Downlink-Modus, SDL, arbeitet, wobei sich das zweite Band von dem ersten Band und einem dritten Band unterscheidet, das dritte Band ein Band ist, das eine Interferenz mit einem Uplink-Signal verursacht, wenn das Uplink-Signal auf dem ersten Band ist, das erste Band als ein Zeitmultiplex-Band, TDD, arbeitet und das dritte Band als ein Frequenzmultiplex-Band, FDD, arbeitet, und das erste Band und das dritte Band an der Basisstation (300) koplanar sind; und
Durchführen einer Datenübertragung mit der Basisstation (300) basierend auf den Konfigurationsinformationen, wobei
die Konfigurationsinformationen Informationen über die Übertragung von Uplink- und Downlink-Schlitzen des ersten Bandes und Trägerkonfigurationsinformationen umfassen, die anzeigen, dass das zweite Band ein primärer Träger und das erste Band ein sekundärer Träger ist.

4. Verfahren nach Anspruch 3, wobei das Durchführen einer Datenübertragung mit der Basisstation (300) basierend auf den Konfigurationsinformationen insbesondere Folgendes umfasst:
Senden eines Uplink-Signals an die Basisstation (300) über das zweite Band; oder
Empfangen eines Downlink-Signals von der Basisstation (300) über das erste Band und/oder das zweite Band.

5. Basisstation, umfassend Mittel, die dazu angepasst sind, die Schritte des Verfahrens nach einem der Ansprüche 1 bis 2 umzusetzen.

6. Endgerät, umfassend Mittel, die dazu angepasst sind, die Schritte des Verfahrens nach einem der Ansprüche 3 bis 4 durchzuführen.

7. Computerprogrammprodukt, umfassend Computerprogrammcode, der, wenn er durch einen Prozessor eines Geräts ausgeführt wird, das Gerät dazu veranlasst, die Schritte des Verfahrens nach einem der Ansprüche 1 bis 4 durchzuführen.

8. Computerlesbares Speichermedium, wobei das computerlesbare Speichermedium ein Computerprogramm speichert, das Computerprogramm mindestens ein Codesegment umfasst und das mindestens eine Codesegment von einem Kommunikationsgerät ausgeführt werden kann, um die Kommunikationsvorrichtung zu steuern, damit es das Verfahren nach einem der Ansprüche 1 bis 4 ausführt.

## Revendications

1. Procédé d'attribution de ressources, appliqué à une station de base (300), dans lequel le procédé comprend :
la réception d'informations de bande provenant d'un terminal (400), dans lequel les informations de bande sont utilisées pour indiquer des types de bande pris en charge par le terminal (400) ; et
l'envoi d'informations de configuration au terminal (400) s'il est détecté que les informations de bande indiquent que les types de bande pris en charge par le terminal (400) comprennent une première bande et une ou plusieurs deuxièmes bandes, dans lequel les informations de configuration sont utilisées pour indiquer d'attribuer la première bande et la deuxième bande au terminal (400), et les informations de configuration indiquent à la première bande de fonctionner dans un mode de liaison descendante supplémentaire, SDL, dans lequel
la deuxième bande est différente de la première bande et d'une troisième bande, la troisième bande est une bande qui provoque des interférences avec un signal de liaison montante si le signal de liaison montante est sur la première bande, la première bande fonctionne comme une bande de multiplexage par répartition dans le temps, TDD, et la troisième bande fonctionne comme une bande de multiplexage par répartition en fréquence, FDD, et la première et la troisième bande sont coplanaires à la station de base (300) ; et
les informations de configuration comprennent des informations d'attribution de créneaux de liaison montante et de liaison descendante de la première bande et des informations de configuration de porteuse indiquant que la deuxième bande est une porteuse principale et que la première bande est une porteuse secondaire.

2. Procédé selon la revendication 1, dans lequel le procédé comprend également :
la réception, via la deuxième bande, d'un signal de liaison montante envoyé par le terminal (400) ; ou
l'envoi d'un signal de liaison descendante au terminal (400) via la première bande et/ou la deuxième bande.

3. Procédé d'attribution de ressources, appliqué à un terminal (400), dans lequel le procédé comprend :
l'envoi d'informations de bande à une station de base (300), dans lequel les informations de bande sont utilisées pour indiquer des types de bande pris en charge par le terminal (400), et les types de bande comprennent une première bande et une ou plusieurs deuxièmes bandes ;
la réception d'informations de configuration renvoyées par la station de base (300) sur la base des types de bandes pris en charge par le terminal (400), dans lequel les informations de configuration sont utilisées pour indiquer d'attribuer la première bande et la deuxième bande au terminal (400), et indiquent à la première bande de fonctionner dans un mode de liaison descendante supplémentaire, SDL, dans lequel la deuxième bande est différente de la première bande et d'une troisième bande, la troisième bande est une bande qui provoque des interférences avec un signal de liaison montante si le signal de liaison montante est sur la première bande, la première bande fonctionne comme une bande de multiplexage par répartition dans le temps, TDD, et la troisième bande fonctionne comme une bande de multiplexage par répartition en fréquence, FDD, et la première et la troisième bande sont coplanaires à la station de base (300) ; et
la réalisation d'une transmission de données avec la station de base (300) sur la base des informations de configuration, dans lequel
les informations de configuration comprennent des informations d'attribution de créneaux de liaison montante et de liaison descendante de la première bande et des informations de configuration de porteuse indiquant que la deuxième bande est une porteuse principale et que la première bande est une porteuse secondaire.

4. Procédé selon la revendication 3, dans lequel la réalisation d'une transmission de données avec la station de base (300) sur la base des informations de configuration comprend spécifiquement :
l'envoi d'un signal de liaison montante à la station de base (300) via la deuxième bande ; ou
la réception, via la première bande et/ou la deuxième bande, d'un signal de liaison descendante provenant de la station de base (300).

5. Station de base comprenant un moyen conçu pour mettre en œuvre les étapes du procédé selon l'une quelconque des revendications 1 et 2.

6. Terminal comprenant un moyen conçu pour mettre en œuvre les étapes du procédé selon l'une quelconque des revendications 3 et 4.

7. Produit de programme informatique comprenant un code de programme informatique qui, lorsqu'il est exécuté par un processeur d'un appareil, amène l'appareil à mettre en œuvre les étapes du procédé selon l'une quelconque des revendications 1 à 4.

8. Support de stockage lisible par ordinateur, dans lequel le support de stockage lisible par ordinateur stocke un programme informatique, le programme informatique comprend au moins un segment de code, et l'au moins un segment de code peut être exécuté par un appareil de communication, afin de commander l'appareil de communication pour réaliser le procédé selon l'une quelconque des revendications 1 à 4.
